# EUROPEAN PATENT SPECIFICATION

(11) **EP 2 000 724 B1**
(45) Date of publication and mention of the grant of the patent: **25.11.2009**
(21) Application number: 07109803.2
(22) Date of filing: 07.06.2007
(51) Int. Cl.: F16L 11/18, F16L 27/02

(54) **Male and female coupling member, pipe module and method for manufacturing the pipe module**
Steck- und Buchsenelement, Rohrmodul und Herstellungsverfahren für das Rohrmodul
Élément d'accouplement mâle et femelle, tuyau et procédé pour la fabrication du tuyau

(43) Date of publication of application: 10.12.2008
(73) Proprietor: Profilspecialisten AB, 428 36 Källered (SE)
(72) Inventor: Thalenius, Tore, 428 37, KÅLLERED (SE); Thoresson, Gunnar, 412 55, GÖTEBORG (SE)
(74) Representative: Fritsche, Daniel

(56) References cited:
- WO-A-2004/059201
- DE-A1- 3 606 420
- FR-A- 2 419 393
- US-A- 1 225 867
- US-A- 4 807 912

## Description

### Technical field

The present invention relates to a divisible pipe module comprising a pipe section, a male coupling member, and a female coupling. It also relates to a method for manufacturing the pipe module.

### Background of the invention

Protective ducting is used, for example, for electrical and optical cables laid in the ground, to prevent exposure of the cables to environmental factors, and to provide mechanical protection. The pipes that are used to protect the cable can be produced in a variety of materials, and through various production technologies. Extrusion moulded pipe sections are associated with low manufacturing costs and thus offers a cost efficient alternative.

As a cable is laid in a trench it is typically reeled out from a cable winder. To avoid that the cable has to be thread through the pipe, each pipe section may comprise two pipe section half shells, which can be separated along a longitudinal split-line. As the cable is laid in the trench, the two pipe section half shells are placed around the cable as a sleeve. Also, since the pipe section is longitudinally divisible it can be laid around an already existing cable, and it can be opened up in order to repair a cable or to add an additional cable.

Now, a series of pipe sections can be laid to form a continuous protective sleeve along the route of the cable. To avoid any gaps between adjacent pipe sections, the pipe sections have traditionally been laid in a way that they overlap. However, this procedure restricts the angle that can be obtained between adjacent pipe sections, and thus causes a problem when the curvature of the cable route is sharp.

For more demanding environments, such as a submarine environment, alternative protective ducting systems have been developed. AU 199527119 discloses a system for protective ducting where the pipe section comprises two half shells, which when mated form a pipe section having a hollow hemispherical section at either end. Through a clamping arrangement, each succeeding pipe section locks the shells of the preceding pipe section together. Through the arrangement, the hemispherical sections provides articulation between adjacent pipe sections like a ball-and-socket joint. DE 3606420 discloses a similar apparatus.

A drawback with this latter type of protective ducting system is that it is associated with a considerably higher cost as it requires more costly materials and manufacturing techniques.

### Summary of the invention

In view of the above-mentioned and other drawbacks of the prior art, a general object of the present invention is to provide an improved interconnection of pipe sections, in particular an interconnection of pipe sections allowing more flexibility in terms of the routing and curvature of the cable to be protected while maintaining cost efficiency.

The present invention is based on the understanding that advantages associated with different production technologies could be combined by producing pipe sections and coupling members separately. As the cross-sectional profile of the male coupling member, as well as of the female coupling member, varies along the axial direction thereof, extrusion moulding is not suitable for manufacturing male and female coupling members. The coupling members are therefore produced with an alternative production technology such as, for example, injection moulding. At the same time, as each pipe section half shell may advantageously have a fixed cross-sectional profile throughout its length, it may be advantageous to utilize extrusion moulding in manufacturing pipe sections, as this helps keeping manufacturing costs down. By combining production technologies, prior art problems, such as the limited angle that can be obtained between adjacent pipe sections, can be overcome while a low manufacturing cost can be maintained. The pipe modules according to the present invention have the further advantage that they are relatively simple and inexpensive to manufacture and enable a flexible production process.

As each pipe module can be separated along a longitudinal split-line, the first and second pipe section half shells, and their associated male and female coupling member parts, may be placed around the cable to form a sleeve, without having to thread the cable through the pipe module. This is advantageous, for example, as the cable is reeled out from a cable winder when laid. It also allows a pipe module to be laid around an already existing cable, and makes it possible to open up a pipe module in order to repair a cable or to add an additional cable. As the male and female coupling members interconnect adjacent pipe sections, any gap between adjacent pipe sections is prevented, thereby providing a closed protective sleeve along the cable.

A further advantage with the invention is that, as a larger angle between adjacent pipe modules is enabled, interconnected pipe modules are less sensitive to irregularities, such as rocks, in the trench where they are laid. Thus, excessive digging and preparation of the trench can be avoided. This leads to ease of use and reduced installation cost.

The first male coupling member part and the second male coupling member part are moveable relative each other in the axial direction.

The first female coupling member part and the second female coupling member part are moveable relative each other in the axial direction.

The first male coupling member part is attached at a first end of the first pipe section half shell, the second male coupling member part is attached at a first end of the second pipe section half shell, the first female coupling member part is attached at a second end of the first pipe section half shell, and the second female coupling member part is attached at a second end of the second pipe section half shell. This arrangement provides a longitudinally divisible pipe module where the first pipe section half shell, along with its male and female coupling member parts, are moveable relative the second pipe section half shell, along with its male and female coupling member parts, in the axial direction.

Thus, by introducing an axial displacement an increased angle can be obtained between adjacent pipe sections. This also has the further advantage that first and second pipe section half shells, and their associated coupling members, can be assembled without a need for precise alignment, thereby facilitating the assembling procedure.

According to one embodiment of the invention, each of the first and second male coupling member parts may, at the attachment end, be provided with an attachment structure having an axial recess formed therein, the axial recess being adapted to receive a pipe wall of its corresponding pipe section half shell. This attachment structure can advantageously be used for attachment to pipe section half shells having a solid pipe wall, and provides a stable attachment of the male coupling member part. The attachment structure makes it easy to mount the male coupling member part at the end of the pipe section half shell and can be combined with a variety of attachment means.

In another embodiment of the invention each of the first and second male coupling member parts, at the attachment end, may be provided with an attachment structure having at least one insertion element extending in the axial direction, and being adapted to be inserted in a cavity in a pipe wall of its corresponding pipe section half shell. This attachment structure can, for example, advantageously be used for attachment to a double walled pipe section comprising first and second double walled pipe section half shells. Each double walled pipe section half shell may typically have an inner wall, and an outer wall, held together by bridge elements. Thereby, a plurality of cavities, in the form of hollow channels extending in the axial direction, may be formed, wherein each channel is defined by the inner wall, the outer wall, and two adjacent bridge elements. The coupling member part can be attached by inserting the at least one insertion element into the at least one hollow channel, thereby providing a stable attachment of the male coupling member part. The attachment structure makes it easy to mount the male coupling member part at the end of the pipe section half shell and can be combined with a variety of attachment means.

The two embodiments of attachment structure which are described above can also be combined into an attachment structure having an axial recess and at least one axial insertion element provided therein. This may provide further stability to the attachment.

Each of the first and second male coupling member parts may be attached to its corresponding pipe section half shell by means of stapling. Stapling provides an easy and cost efficient way to securely fix a male coupling member part to a pipe section half shell, and allows use of standard tools. In an alternative embodiment the attachment structure may be punched to the pipe section half shell with, for example, a pointed hammer whereby, at the point of impact, a portion of the attachment structure penetrates into the surface of the pipe section half shell, thereby fixing the coupling member.

All features described above relating to the attachment structure of the male coupling member are equally applicable to the female coupling member.

The radially projecting structure may be an external flange segment. The flange segment may extend along the entire perimeter of the male coupling member or over a portion thereof. The flange segment may also have the form of, for example, tabs or pins spaced along the perimeter of the male coupling member. An advantage associated with using a flange segment is that it is easy to manufacture and to adapt in such a way that a considerable play is allowed with respect to a complementary female coupling member in which the flange segment may be received. According to one embodiment the flange segment may be chamfered for increased play.

An extension in the axial direction of the radial recess of the receiving structure may preferably be at least 1.5 times an extension in the axial direction of the radially projecting structure of the male coupling member according to the invention. This allows a play between the male and the female coupling members, making it possible to obtain a larger angle between adjacent pipe sections. To provide further improved "curve-taking" capabilities the extension in the axial direction of the radial recess of the receiving structure can be at least five times the extension in the axial direction of the radially projecting structure, or at least ten times the extension in the axial direction of the radially projecting structure.

The angle that can be achieved between adjacent pipe sections will depend on the diameter of the pipe section. Generally, a larger diameter requires a larger ratio between the extension in the axial direction of the radial recess of the receiving structure, and the extension in the axial direction of the radially projecting structure, to achieve a given angle between adjacent pipe sections.

The receiving structure may have an internal flange segment and a shoulder defining the extension in the axial direction of the radial recess of the receiving structure. By modifying the distance between the internal flange and the shoulder, the play between the male coupling member and the female coupling member can be altered. The shoulder may also restrict to what extent the male coupling member and the female coupling member can overlap.

According to a third aspect of the invention, the above mentioned and other objects are achieved through a method of manufacturing pipe modules according to the invention comprising the steps of:
providing a pipe section comprising a first and a second pipe section half shell;
attaching a first male coupling member part at a first end of the first pipe section half shell; and
attaching a second male coupling member part at a first end of the second pipe section half shell; and
attaching a first female coupling member part at a second end of the first pipe section half shell; and
attaching a second female coupling member part at a second end of the second pipe section half shell.

This method of manufacturing has the advantage that it is relatively simple and inexpensive. As the coupling member parts are manufactured separately from the pipe section, different production technologies can be used. Whereas extrusion moulding, which is associated with low cost, may be used for manufacturing the pipe sections, alternative production technologies, that do not implicate a fixed cross-sectional profile, may be used to manufacture the coupling members.

The method also provides a flexible production process. For example, to produce a pipe module having a new length is just a matter of cutting the extrusion moulded pipe section in a new length, as the same coupling members can be used. This leads to an increased flexibility and cost efficiency in the production process compared to other techniques, such as injection moulding, where a new tool has to be designed for each new pipe length.

Other objectives, features and advantages will appear from the following detailed disclosure, from the attached dependent claims as well as from the drawings.

In summary the invention relates to, a pipe module comprising: a pipe section having a first and a second pipe section half shell; a male coupling member having a first and second male coupling member part attached at a first end of the pipe section; a female coupling member having a first and second female coupling member part attached at a second end of the pipe section. Each of the male and female coupling member parts has an attachment end adapted to enable attachment thereof to its corresponding pipe section half shell. Further, a coupling end of the male coupling member part has a radially projecting structure for enabling connection to a receiving structure of a complementary female coupling member attached to an adjacent pipe module.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Figure 1a is a schematic view of two interconnected pipe modules in a trench.
Figure 1b is a perspective view of a pipe module according to the present invention.
Figure 2a illustrates an embodiment of a pipe section comprising first and second pipe section half shells.
Figure 2b illustrates an embodiment of a pipe section comprising double walled pipe section half shells.
Figure 3 is a perspective view of a male coupling member comprising first and second male coupling member parts.
Figure 4 is a cross-section of a male coupling member comprising first and second male coupling member parts.
Figure 5 is a perspective view of a female coupling member comprising first and second female coupling member parts.
Figure 6 is a cross-section of a female coupling member comprising first and second female coupling member parts.
Figure 7 is a cross-section of two interconnected pipe modules.
Figure 8 is a process diagram illustrating steps associated with the manufacturing of pipe modules.

### Detailed description of preferred embodiments

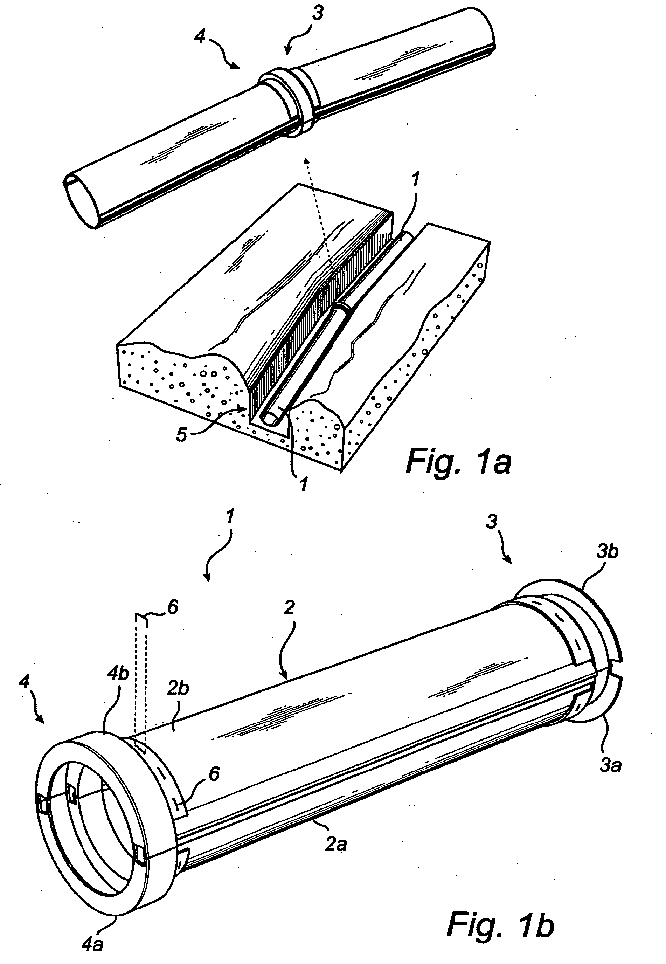

Figure 1a illustrates two interconnected pipe modules 1 in a trench 5. The male and female coupling members 3,4 enables a play whereby an angle can be obtained between adjacent pipe modules 1. This enables a sharper curvature of the route of the pipe modules and makes interconnected pipe modules less sensitive to irregularities, such as rocks, present in the trench.

In figure 1b a pipe module 1 that can be used for protective ducting is illustrated. The pipe module 1 comprises a pipe section 2 with a male coupling member 3 attached at a first end and a female coupling member 4 attached at a second end. The pipe section 2 comprises a first pipe section half shell 2a and a second pipe section half shell 2b. Further, the male coupling member 3 comprises a first male coupling member part 3a and a second male coupling member part 3b, and the female coupling member 4 comprises a first female coupling member part 4a and a second female coupling member part 4b.

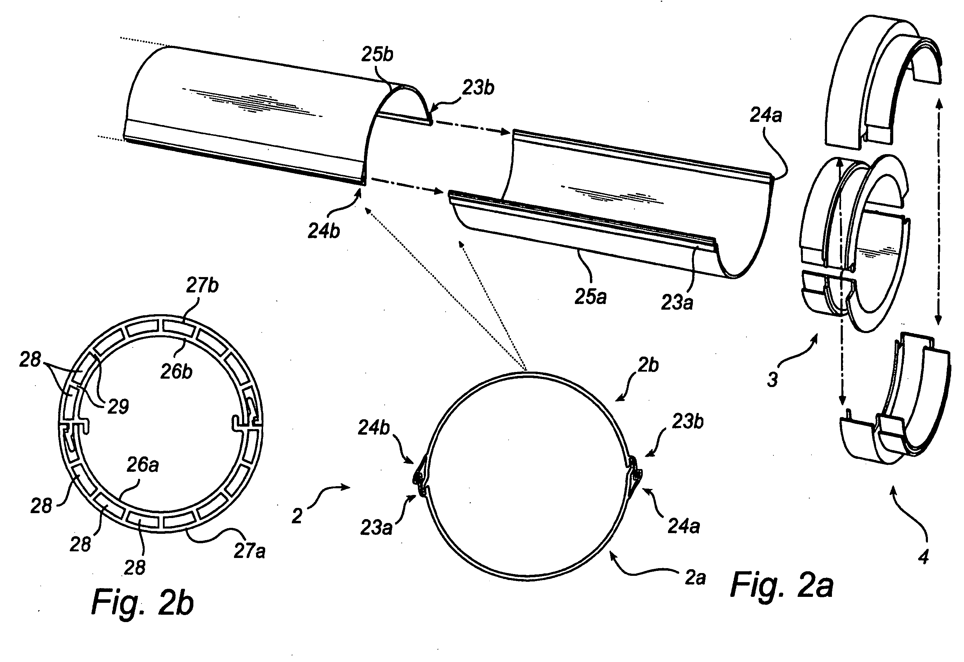

With reference to figure 2a, the illustrated pipe section 2 comprises two identical pipe section half shells 2a,2b, which are divisible along longitudinal split lines. Each pipe section half shell 2a,2b has an essentially semi-circular cross-section, and a longitudinally extending sealing structure 23a,23b,24a,24b. The sealing structure 23a,23b,24a,24b is here complementary in such a way that as two pipe section half shells 2a,2b are put together to form a pipe section 2, the sealing structures 23a,23b,24a,24b connect the first half shell 2a and the second half shell 2b.

As each of the pipe section half shells has a fixed cross-sectional profile throughout its length, the pipe section half shells 2a,2b, including the sealing structure 23a,23b,24a,24b, are preferably extrusion moulded in a suitable thermoplastic material, such as polyethene, polypropylene, or PVC.

A typical pipe section 2 for cable protection has a length of 3000 mm, an internal diameter of approximately 100 mm and the thickness of each half shell 2a,2b can be around 5 mm. Examples of other commonly used pipe section diameters(expressed in mm on the form external diameter/internal diameter) are 58/50, 83/75, 160/138. The pipe section diameter 160/138 typically is a double walled pipe section, as illustrated in figure 2b. Here, each pipe section half shell has an inner wall 26a,26b, and an outer wall 27a, 27b, which are held together by bridge elements 29. Thus a plurality of cavities 28, in the form of hollow channels 28 extending in the axial direction, are formed. Each channel 28 is defined by the inner wall 26a,26b, the outer wall 27a,27b, and two adjacent bridge elements 29. Utilizing a double walled pipe section provides increased ring stiffness, while maintaining low weight. As understood by a person skilled in the art, double walled pipes may equally well be utilized for other pipe section diameters. Actually, one of the advantages associated with the present invention is that double walled pipe sections may be utilized also for smaller pipe section diameters.

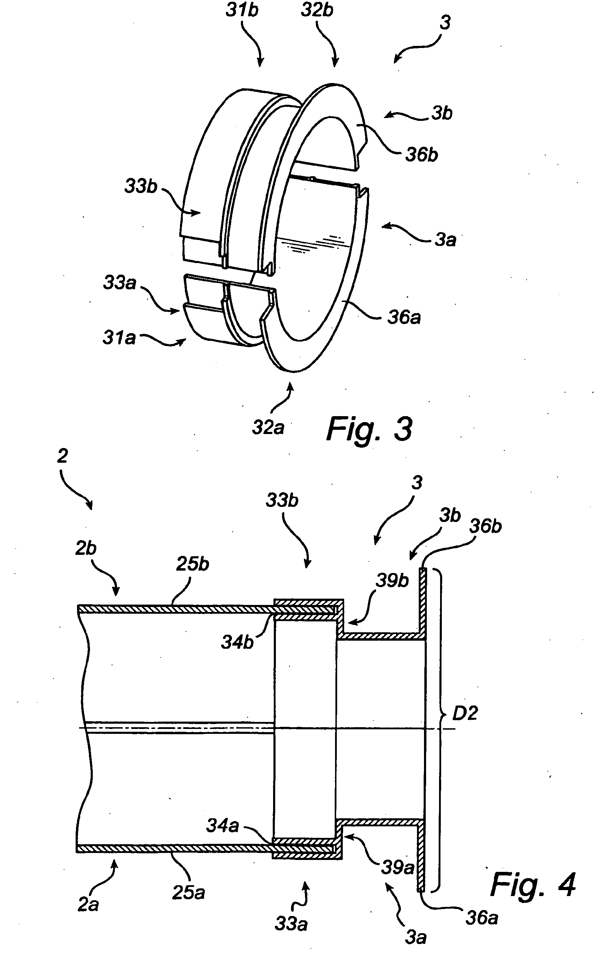

Figure 3 and 4 illustrate the male coupling member 3 comprising the first male coupling member part 3a and the second male coupling member part 3b. Each male coupling member part 3a,3b has an essentially semi-circular cross-section and extends in an axial direction thereof, from an attachment end 31a,31b to a coupling end 32a,32b.

At the attachment end 31a,31b, each male coupling member part 3a,3b is provided with an attachment structure 33a,33b. Each attachment structure 33a,33b has an axial recess 34a,34b adapted to receive a pipe wall 25a,25b of the pipe section half shell 2a,2b to which the male coupling member part 3a,3b is to be attached.

At the coupling end 32a,32b, each male coupling member part 3a,3b is provided with a radially projecting structure 36a,36b for enabling connection to the complementary female coupling member 4 (as illustrated in figure 2a). The radially projecting structure 36a,36b is here an external flange segment 36a,36b. The flange segment 36a,36b is situated at the end of the male coupling member part 3a,3b and extends radially throughout the semi-circular perimeter of the male coupling member part 3a,3b.

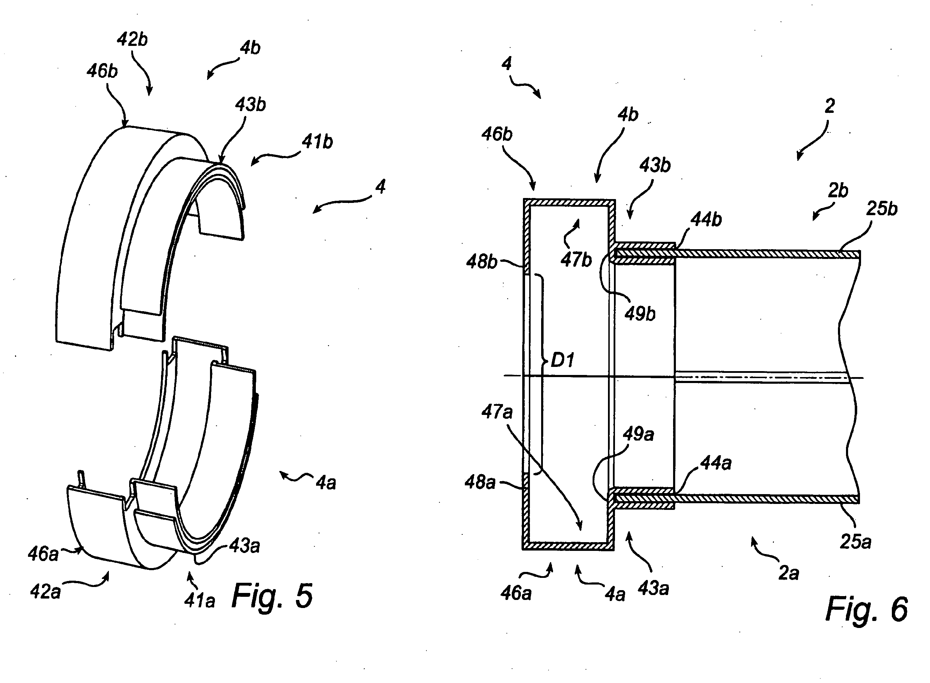

Figure 5 and 6 illustrate the female coupling member 4, which differs from the male coupling member described above in that each female coupling member part 4a,4b, at the coupling end 42a,42b, is provided with a receiving structure 46a,46b having a radial recess 47a,47b adapted to receive the radially projecting structure 36a,36b of the male coupling member part 3a,3b comprised in the male coupling member 3 (as illustrated in figures 2 to 4). The receiving structure 46a,46b has an internal flange segment 48a,48b situated at the end of the female coupling part 4a,4b.

Referring to figure 4, 6, and 7, the diameter D1 between the inner tips of the internal flange segments 48a,48b of the assembled female coupling member 4, is smaller than the diameter D2 between the outer tips of the external flange segments 36a,36b of the assembled male coupling member 3. This requires that the female coupling member 4 can be opened so that its radial recesses 47a,47b can receive the external flange segments 36a,36b of the male coupling member 3. Through this arrangement the coupling members 3,4 cannot disengage unless the female coupling member 4 is taken apart. This prevents any gap to occur between adjacent pipe sections and, for example, sand or the like to get inside the pipe modules. Further, each of the male coupling member parts 3a,3b and the female coupling member parts 4a,4b has a shoulder 39a,39b,49a,49b that restricts to what extent the male coupling member 3 and the female coupling member 4 can overlap. By modifying the distance between the internal flange 48a and the shoulder 49a of the female coupling member part, (and/or the external flange 36a and the shoulder 39a of the male coupling member part), the play between the male coupling member 3 and the female coupling members 4 can be altered, and thereby the maximum angle that can be obtained between adjacent pipe sections.

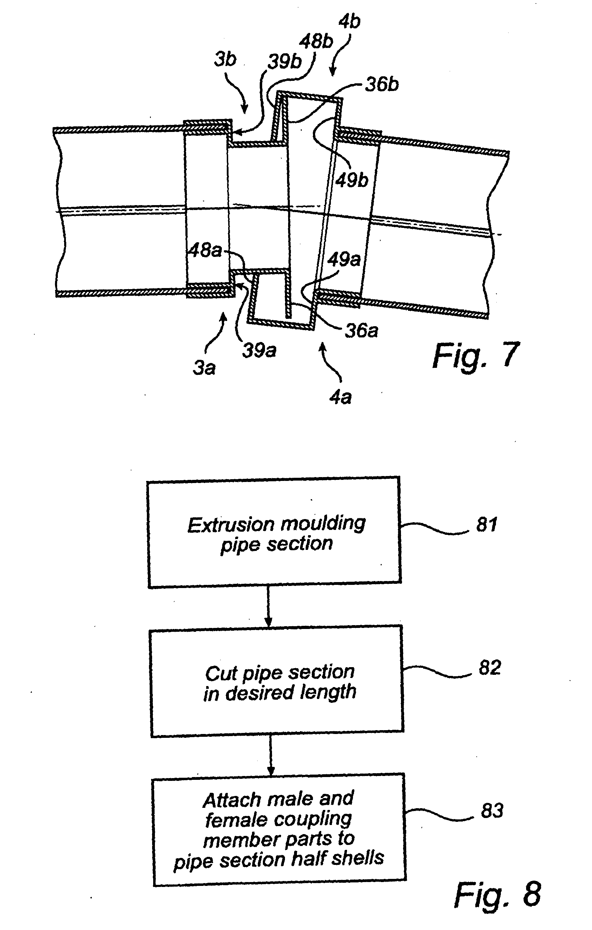

With reference to figure 8, a preferred method for manufacturing pipe modules 1 is described. In step 81, pipe sections comprising first and second pipe section half shells 2a,2b, are extrusion moulded in thermoplastic material, such as polyethene, polypropylene, or PVC. In step 82, the extrusion moulded pipe section is cut in desired length.

Then, in step 83, male coupling member parts 3a,3b and female coupling member parts 4a,4b are attached to the pipe section half shells. In doing so, each coupling member part 3a,3b,4a,4b may be stapled to the half shell 2a,2b (as illustrated by the staples 6 in figure 1b).

The described embodiments, manufacturing technologies and materials are merely exemplifying. Thus, although the male and female coupling member parts 3,4, are typically injection moulded in a suitable thermoplastic material, such as polyethene or polypropylene, other manufacturing technologies and materials can be used equally well. For instance ABS (acrylonitrile butadiene styrene), polystyrene, nylon, or PVC can be used for injection moulding. Yet another alternative is to produce coupling member parts 3,4 in metal.

Similarly, the pipe section half shells can equally well be formed by any other suitable manufacturing technology using any other suitable material such as plastics or metal.

Further, whereas stapling provides an easy and cost efficient way to securely fix coupling member parts 3a,3b,4a,4b to the pipe section half shells 2a,2b, alternative attachment means for attaching the coupling member parts 3a,3b,4a,4b to the half shells 2a,2b may equally well be used. For example, punching may be used as an alternative method. Further alternatives could be, for example, riveting, gluing, welding, press-fitting, or snap-fitting.

Further, the dimension and cross-section of the pipe section half shells 2a,2b, and the coupling member parts may vary.

Also, the first and second pipe section half shells 2a,2b may be longitudinally hinged, rather than being two separate pipe section half shells. Similarly, the first and second male coupling member parts 3a,3b may be hinged, as may the first and second female coupling member parts 4a,4b.

The invention has mainly been described above with reference to a few embodiments. However, as is readily appreciated by a person skilled in the art, other embodiments than the ones disclosed above are equally possible within the scope of the invention, as defined by the appended claims.

## Claims

1. A pipe module (1), comprising:
a pipe section (2) comprising a first and a second pipe section half shell (2a,2b);
a male cooling member (3) produced separately from said pipe section and attached at a first end of said pipe section (2) ; said male coupling member (3) comprising:
a first male coupling member part (3a) for attachment to said first pipe section half shell (2a); and
a second male coupling member part (3b) for attachment to said second pipe section half shell (2b),
each of said male coupling member parts (3a,3b) having an essentially semi-circular cross-section, and extending, in an axial direction thereof, from an attachment end (31a,31b) to a coupling end (32a,32b), wherein each of said male coupling member parts (3a,3b):
at said attachment end (31a,31b), is adapted to enable attachment thereof to its corresponding pipe section half shell (2a,2b); and
at said coupling end (32a,32b), on a side of said male coupling member part (3a,3b) facing away from a centre of curvature thereof, is provided with a radially projecting structure (36a,36b) for enabling connection to a complementary female coupling member (4) attached to an adjacent pipe section;
a female coupling member (4) produced separately from said pipe section and attached at a second end of said pipe section (2); said female coupling member (4) comprising:
a first female coupling member part (4a) for attachment to said first pipe section half shell (2a); and
a second female coupling member part (4b) for attachment to said second pipe section half shell (2b),
each of said female coupling member parts (4a,4b) having an essentially semi-circular cross-section, and extending, in an axial direction thereof, from an attachment end (41a,41b) to a coupling end (42a,42b), wherein each of said female coupling member parts (4a,4b):
at said attachment end (41a,41b), is adapted to enable attachment thereof to its corresponding pipe section half shell (2a,2b); and
at said coupling end (42a,42b), is provided with a receiving structure (46a,46b) having a radial recess (47a,47b) adapted to receive said radially projecting structure (36a,36b) of the male coupling member part (3a,3b) comprised in the male coupling member (3)
**characterized in that**, when said pipe module is assembled, said first pipe section half shell, along with its male and female coupling member parts, is moveable relative said second pipe section half shell, along with its male and female coupling member parts, in the axial direction.

2. A pipe module according to claim 1, wherein said radially projecting structure (36a,36b) is an external flange segment.

3. A pipe module according to claim 1 or 2, wherein each of said first and second male coupling member parts (3a,3b) and said first and second female coupling member parts (4a,4b), at said attachment end (31a,31b), is provided with an attachment structure (33a,33b) having an axial recess (34a,34b) formed therein, said recess (34a,34b) being adapted to receive a pipe wall of its corresponding pipe section half shell (2a,2b).

4. A pipe module according to any one of the above claims, wherein, each of said first and second male coupling member parts (3a,3b) and said first and second female coupling member parts (4a,4b), at said attachment end (31a,31b), is provided with an attachment structure (33a,33b) having at least one insertion element extending in said axial direction, and being adapted to be inserted in a cavity in a pipe wall of its corresponding pipe section-half shell (2a,2b).

5. A pipe module according to any one of the above claims, wherein an extension in the axial direction of said radical recess (47a,47b) of said receiving structure (46a,46b) is at least 1.5 times an extension in axial direction of said radially projecting structure (36a,36b) of the male coupling member (3a, 3b).

6. A pipe module according to any one of the above claims, wherein said receiving structure (46a,46b) has an internal flange segment (48a,48b) and a shoulder (49a,49b) defiling the extension in the axial direction of said radial recess (47a, 47b).

7. A pipe module according to any one of the above claims, wherein
said first male coupling member part (3a) is attached at a first end of said first pipe section half shell (2a),
said second male coupling member part (3b) is attached at a first end of said second pipe section half shell (2b),
said first female coupling member part (4a) is attached at a second end of said first pipe section half shell (2a), and
said second female coupling member part (4b) is attached at a second end of said second pipe section half shell (2b).

8. A pipe module according to any one of the above claims, wherein said pipe section (2) is extrusion moulded.

9. A pipe module according to any one of the above claims, wherein each of said first and second male coupling member parts (3a,3b) is attached to its corresponding pipe section half shell by means of stapling.

10. A method of manufacturing pipe modules (1) according to any one of the above claims, comprising the steps of:
providing a pipe section (2) comprising a first and a second pipe section half shell (2a,2b);
attaching a first male coupling member part (3a) at a first end of said first pipe section half shell (2a); and
attaching a second male coupling member part (3b) at a first end of said second pipe section half shell (2b); and
attaching a first female coupling member part (4a) at a second end of said first pipe section half shell (2a); and
attaching a second female coupling member part (4b) at a second end of said second pipe section half shell (2b).

11. A method of manufacturing pipe modules according to claim 10, wherein:
said coupling member parts (3a,3b,4a,4b) are attached through stapling.

## Patentansprüche

1. Rohrmodul (1), das Folgendes aufweist:
einen Rohrabschnitt (2) mit einem ersten und einem zweiten Rohrabschnitt-Halbmantel (2a, 2b);
ein Steckverbindungselement (3), das getrennt von dem Rohrabschnitt hergestellt ist und an einem ersten Ende des Rohrabschnitts (2) befestigt ist, mit:
einem ersten Steckverbindungselementteil (3a) zur Befestigung an dem ersten Rohrabschnitt-Halbmantel (2a) und
einem zweiten Steckverbindungselementteil (3b) zur Befestigung an dem zweiten Rohrabschnitt-Halbmantel (2b), wobei jedes der Steckverbindungselementteile (3a, 3b) einen im Wesentlichen halbkreisförmigen Querschnitt hat und in seiner Axialrichtung von einem Befestigungsende (31 a, 31 b) zu einem Verbindungsende (32a, 32b) verläuft, wobei
jedes der Steckverbindungselementteile (3a, 3b) an dem Befestigungsende (31 a, 31 b) so eingerichtet ist, dass es seine Befestigung an seinem entsprechenden Rohrabschnitt-Halbmantel (2a, 2b) ermöglicht, und
jedes der Steckverbindungselementteile (3a, 3b) an dem Verbindungsende (32a, 32b) auf einer Seite des Steckverbindungselementteils (3a, 3b), die von einem Mittelpunkt seiner Krümmung weg zeigt, mit einer radial vorstehenden Struktur (36a, 36b) zum Herstellen einer Verbindung mit einem komplementären Buchsenverbindungselement (4) versehen ist, das an einem benachbarten Rohrabschnitt befestigt ist; und
ein Buchsenverbindungselement (4), das getrennt von dem Rohrabschnitt hergestellt ist und an einem zweiten Ende des Rohrabschnitts (2) befestigt ist, mit:
einem ersten Buchsenverbindungselementteil (4a) zur Befestigung an dem ersten Rohrabschnitt-Halbmantel (2a) und
einem zweiten Buchsenverbindungselementteil (4b) zur Befestigung an dem zweiten Rohrabschnitt-Halbmantel (2b), wobei jedes der Buchsenverbindungselementteile (4a, 4b) einen im Wesentlichen halbkreisförmigen Querschnitt hat und in seiner Axialrichtung von einem Befestigungsende (41 a, 41 b) zu einem Verbindungsende (42a, 42b) verläuft, wobei
jedes der Buchsenverbindungselementteile (4a, 4b) an dem Befestigungsende (41 a, 41 b) so eingerichtet sind, dass es seine Befestigung an seinem entsprechenden Rohrabschnitt-Halbmantel (2a, 2b) ermöglicht, und
jedes der Buchsenverbindungselementteile (4a, 4b) an dem Verbindungsende (42a, 42b) mit einer Aufnahmestruktur (46a, 46b) mit einer radialen Vertiefung (47a, 47b) versehen ist, die so eingerichtet ist, dass sie die radial vorstehende Struktur (36a, 36b) des an dem Steckverbindungselement (3) vorhandenen Steckverbindungselementteils (3a, 3b) aufnimmt,
**dadurch gekennzeichnet, dass** beim Zusammensetzen des Rohrmoduls der erste Rohrabschnitt-Halbmantel zusammen mit seinen Steck- und Buchsenverbindungselementteilen in Bezug auf den zweiten Rohrabschnitt-Halbmantel zusammen mit seinen Steck- und Buchsenverbindungselementteilen in der Axialrichtung beweglich ist.

2. Rohrmodul nach Anspruch 1, **dadurch gekennzeichnet, dass** die radial vorstehende Struktur (36a, 36b) ein Außenflanschsegment ist.

3. Rohrmodul nach Anspruch 1 oder 2, **dadurch gekennzeichnet, dass** das erste und das zweite Steckverbindungselementteil (3a, 3b) und das erste und das zweite Buchsenverbindungselementteil (4a, 4b) jeweils an dem Befestigungsende (31 a, 31 b) mit einer Befestigungsstruktur (33a, 33b) mit einer darin ausgebildeten Axialvertiefung (34a, 34b) versehen sind, die so eingerichtet ist, dass sie eine Rohrwand ihres entsprechenden Rohrabschnitt-Halbmantels (2a, 2b) aufnimmt.

4. Rohrmodul nach einem der vorhergehenden Ansprüche, **dadurch gekennzeichnet, dass** das erste und das zweite Steckverbindungselementteil (3a, 3b) und das erste und das zweite Buchsenverbindungselementteil (4a, 4b) jeweils an dem Befestigungsende (31 a, 31 b) mit einer Befestigungsstruktur (33a, 33b) mit mindestens einem in der Axialrichtung verlaufenden Einsteckelement versehen sind, das so eingerichtet ist, dass es in eine Vertiefung in einer Rohrwand seines entsprechenden Rohrabschnitt-Halbmantels (2a, 2b) eingesteckt wird.

5. Rohrmodul nach einem der vorhergehenden Ansprüche, **dadurch gekennzeichnet, dass** eine Ausdehnung der radialen Vertiefung (47a, 47b) der Aufnahmestruktur (46a, 46b) in der Axialrichtung mindestens das 1,5-fache einer Ausdehnung der radial vorstehenden Struktur (36a, 36b) des Steckverbindungselements (3a, 3b) in Axialrichtung beträgt.

6. Rohrmodul nach einem der vorhergehenden Ansprüche, **dadurch gekennzeichnet, dass** die Aufnahmestruktur (46a, 46b) ein Innenflanschsegment (48a, 48b) und eine Schulter (49a, 49b) hat, die die Ausdehnung der radialen Vertiefung (47a, 47b) in der Axialrichtung definieren.

7. Rohrmodul nach einem der vorhergehenden Ansprüche, **dadurch gekennzeichnet, dass**
das erste Steckverbindungselementteil (3a) an einem ersten Ende des ersten Rohrabschnitt-Halbmantels (2a) befestigt ist,
das zweite Steckverbindungselementteil (3b) an einem ersten Ende des zweiten Rohrabschnitt-Halbmantels (2b) befestigt ist,
das erste Buchsenverbindungselementteil (4a) an einem zweiten Ende des ersten Rohrabschnitt-Halbmantels (2a) befestigt ist und
das zweite Buchsenverbindungselementteil (4b) an einem zweiten Ende des zweiten Rohrabschnitt-Halbmantels (2b) befestigt ist.

8. Rohrmodul nach einem der vorhergehenden Ansprüche, **dadurch gekennzeichnet, dass** der Rohrabschnitt (2) extrudiert ist.

9. Rohrmodul nach einem der vorhergehenden Ansprüche, **dadurch gekennzeichnet, dass** das erste und das zweite Steckverbindungselementteil (3a, 3b) jeweils an seinem entsprechenden Rohrabschnitt-Halbmantel mittels Krampen befestigt ist.

10. Verfahren zum Herstellen von Rohrmodulen (1) nach einem der vorhergehenden Ansprüche, mit den folgenden Schritten:
Bereitstellen eines Rohrabschnitts (2) mit einem ersten und einem zweiten Rohrabschnitt-Halbmantel (2a, 2b);
Befestigen eines ersten Steckverbindungselementteils (3a) an einem ersten Ende des ersten Rohrabschnitt-Halbmantels (2a);
Befestigen eines zweiten Steckverbindungselementteils (3b) an einem ersten Ende des zweiten Rohrabschnitt-Halbmantels (2b);
Befestigen eines ersten Buchsenverbindungselementteils (4a) an einem zweiten Ende des ersten Rohrabschnitt-Halbmantels (2a) und
Befestigen eines zweiten Buchsenverbindungselementteils (4b) an einem zweiten Ende des zweiten Rohrabschnitt-Halbmantels (2b).

11. Verfahren zum Herstellen von Rohrmodulen nach Anspruch 10, **dadurch gekennzeichnet, dass** die Verbindungselementteile (3a, 3b, 4a, 4b) mittels Krampen befestigt werden.

## Revendications

1. Module de tuyau (1) comprenant:
un tronçon de tuyau (2) comprenant une première et une deuxième demi-coquilles (2a, 2b) du tronçon de tuyau;
un organe d'accouplement mâle (3) réalisé séparément dudit tronçon de tuyau et fixé à une première extrémité dudit tronçon de tuyau (2), ledit organe d'accouplement (3) comprenant:
une première partie (3a) de l'organe d'accouplement mâle pour la fixation à ladite première demi-coquille (2a) du tronçon de tuyau; et
une deuxième partie (3b) de l'organe d'accouplement mâle pour la fixation à ladite deuxième demi-coquille (2b) du tronçon de tuyau,
chacune desdites parties (3a, 3b) de l'organe d'accouplement mâle ayant une section transversale essentiellement demi-circulaire, et s'étendant, dans une direction axiale correspondante, d'une extrémité de fixation (31a, 31b) jusqu'à une extrémité d'accouplement (32a, 32b), où chacune desdites parties (3a, 3b) de l'organe d'accouplement mâle:
au niveau de ladite extrémité de fixation (31a, 31b), est adaptée pour permettre sa fixation à sa demi-coquille (2a, 2b) du tronçon de tuyau correspondante; et
au niveau de ladite extrémité d'accouplement (32a, 32b), sur un côté de ladite partie (3a, 3b) de l'organe d'accouplement mâle dos à un centre de courbure correspondant, est dotée d'une structure (36a, 36b) en projection radiale pour permettre le raccordement à un organe d'accouplement femelle complémentaire (4) fixé à un tronçon de tuyau adjacent;
un organe d'accouplement femelle (4) réalisé séparément dudit tronçon de tuyau et fixé à une deuxième extrémité dudit tronçon de tuyau (2);
ledit organe d'accouplement femelle (4) comprenant:
une première partie (4a) de l'organe d'accouplement femelle pour la fixation à ladite première demi-coquille (2a) du tronçon de tuyau; et
une deuxième partie (4b) de l'organe d'accouplement femelle pour la fixation à ladite deuxième demi-coquille (2b) du tronçon de tuyau,
chacune desdites parties (4a, 4b) de l'organe d'accouplement femelle ayant une section transversale essentiellement demi-circulaire, et s'étendant, dans une direction axiale correspondante, d'une extrémité de fixation (41a, 41b) jusqu'à une extrémité d'accouplement (42a, 42b), où chacune desdites parties (4a, 4b) de l'organe d'accouplement femelle:
au niveau de ladite extrémité de fixation (41a, 41b), est adaptée pour permettre sa fixation à sa demi-coquille (2a, 2b) de tronçon de tuyau correspondante; et
au niveau de ladite extrémité d'accouplement (42a, 42b), est dotée d'une structure de réception (46a, 46b) ayant un évidement radial (47a, 47b) adapté pour recevoir ladite structure (36a, 36b) en projection radiale de la partie (3a, 3b) de l'organe d'accouplement mâle comprise dans l'organe d'accouplement mâle (3),
**caractérisé en ce que**,
lorsque ledit module de tuyau est assemblé, ladite première demi-coquille du tronçon de tuyau, avec ses parties d'organes d'accouplement mâle et femelle, est mobile par rapport à ladite deuxième demi-coquille du tronçon de tuyau, avec ses parties d'organes d'accouplement mâle et femelle, dans la direction axiale.

2. Module de tuyau selon la revendication 1, dans lequel ladite structure (36a, 36b) en projection radiale est un segment de bride externe.

3. Module de tuyau selon la revendication 1 ou 2, dans lequel chacune desdites première et deuxième parties (3a, 3b) de l'organe d'accouplement mâle et lesdites première et deuxième parties (4a, 4b) de l'organe d'accouplement femelle, au niveau de ladite extrémité de fixation (31a, 31b), est dotée d'une structure de fixation (33a, 33b) ayant un évidement axial (34a, 34b) qui y est formé, ledit évidement (34a, 34b) étant adapté pour recevoir une paroi de tuyau de sa demi-coquille (2a, 2b) du tronçon de tuyau correspondante.

4. Module de tuyau selon l'une quelconque des revendications précédentes, dans lequel, chacune desdites première et deuxième parties (3a, 3b) de l'organe d'accouplement mâle et lesdites première et deuxième parties (4a, 4b) de l'organe d'accouplement femelle, au niveau de ladite extrémité de fixation (31a, 31b), est dotée d'une structure de fixation (33a, 33b) ayant au moins un élément d'insertion se déployant dans ladite direction axiale, et étant adaptée pour être insérée dans une cavité dans une paroi de tuyau de sa demi-coquille (2a, 2b) du tronçon de tuyau correspondante.

5. Module de tuyau selon l'une quelconque des revendications précédentes, dans lequel une extension dans la direction axiale dudit évidement radial (47a, 47b) de ladite structure de réception (46a, 46b) est d'au moins 1,5 fois l'extension dans une direction axiale de ladite structure (36a, 36b) en projection radiale de l'organe d'accouplement mâle (3a, 3b).

6. Module de tuyau selon l'une quelconque des revendications précédentes, dans lequel ladite structure de réception (46a, 46b) possède un segment de bride interne (48a, 48b) et un épaulement (49a, 49b) définissant l'extension dans la direction axiale dudit évidement radial (47a, 47b).

7. Module de tuyau selon l'une quelconque des revendications précédentes, dans lequel
ladite première partie (3a) de l'organe d'accouplement mâle est fixée à une première extrémité de ladite première demi-coquille (2a) du tronçon de tuyau,
ladite deuxième partie (3b) de l'organe d'accouplement mâle est fixée à une première extrémité de ladite deuxième demi-coquille (2b) du tronçon de tuyau,
ladite première partie (4a) de l'organe d'accouplement femelle est fixée à une deuxième extrémité de ladite première demi-coquille (2a) du tronçon de tuyau, et
ladite deuxième partie (4b) de l'organe d'accouplement femelle est fixée à une deuxième extrémité de ladite deuxième demi-coquille (2b) du tronçon de tuyau.

8. Module de tuyau selon l'une quelconque des revendications précédentes, dans lequel ledit tronçon de tuyau (2) est moulé par extrusion.

9. Module de tuyau selon l'une quelconque des revendications précédentes, dans lequel chacune desdites première et deuxième parties (3a, 3b) de l'organe d'accouplement mâle est fixée à sa demi coquille correspondante du tronçon de tuyau par agrafage.

10. Procédé de fabrication de modules de tuyaux (1) selon l'une quelconque des revendications précédentes, comprenant les étapes qui consistent à:
fournir un tronçon de tuyau (2) comprenant une première et une deuxième demi-coquilles (2a, 2b) du tronçon de tuyau;
fixer une première partie (3a) d'un organe d'accouplement mâle à une première extrémité de ladite première demi-coquille (2a) du tronçon de tuyau; et
fixer une deuxième partie (3b) de l'organe d'accouplement mâle à une première extrémité de ladite deuxième demi-coquille (2b) du tronçon de tuyau; et
fixer une première partie (4a) d'un organe d'accouplement femelle à une deuxième extrémité de ladite première demi-coquille (2a) du tronçon de tuyau; et
fixer une deuxième partie (4b) de l'organe d'accouplement femelle à une deuxième extrémité de ladite deuxième demi-coquille (2b) du tronçon de tuyau.

11. Procédé de fabrication de modules de tuyaux (1) selon la revendication 10, dans lequel
lesdites parties (3a, 3b, 4a, 4b) des organes d'accouplement sont fixées par agrafage.
